# EUROPÄISCHE PATENTSCHRIFT

(11) **EP 0 706 603 B1**
(45) Veröffentlichungstag und Bekanntmachung des Hinweises auf die Patenterteilung: **04.06.1997**
(21) Anmeldenummer: 94919674.5
(22) Anmeldetag: 30.06.1994
(51) Int. Cl.: E05F 11/48, F16C 1/26

(54) **SEILZUG-FENSTERHEBER**
CABLE-OPERATED WINDOW LIFTER
LEVE-GLACE A CABLE

(30) Priorität: 30.06.1993 DE 4321735
(43) Veröffentlichungstag der Anmeldung: 17.04.1996
(73) Patentinhaber: KÜSTER & Co. GmbH, D-35630 Ehringshausen (DE)
(72) Erfinder: MEDEBACH, Thomas, D-35582 Wetzlar-Dudenhofen (DE)
(74) Vertreter: Müller, Eckhard, Dr.
(86) Internationale Anmeldenummer: EP9402141
(87) Internationale Veröffentlichungsnummer: WO9501492

(56) Entgegenhaltungen:
- DE-A- 4 015 774
- FR-A- 1 199 784
- US-A- 3 444 649
- US-A- 4 452 097
- US-A- 4 920 697

## Beschreibung

Die Erfindung bezieht sich auf einen Seilzug-Fensterheber gemäß dem Oberbegriff des Anspruches 1.

Aus der FR-PS 11 99 784 ist bereits ein derartiger Seilzug-Fensterheber bekannt. Dieser Fensterheber weist eine Antriebseinheit für das Seil des Seilzuges auf, welches mittels Umlenkteilen über eine vertikale Strecke geführt und in diesem Abschnitt mit einem Mitnehmer, der die Fensterscheibe hält, verbunden ist. Der Mitnehmer weist keine separate Führung auf und ist mittels eines Klemmstücks an dem Seilzug festgelegt. Insbesondere ist die Art der Verbindung zwischen Mitnehmer und Seilzug bei dieser bekannten Ausführungsform konstruktiv aufwendig, wobei zusätzlich die Gefahr eines unbeabsichtigten Lösens der Verbindung zwischen Seilzug und Mitnehmer besteht.

Ein weiterer Seilzug-Fensterheber ist aus der US-A-4 920 697 bekannt. Hierbei ist ein Querträger, der mit der Fensterscheibe verbunden ist, vorgesehen, der beidends mit Mitnehmern verbunden ist, die ihrerseits an dem Seilzug befestigt sind.

Die DE 40 15 774 A1 offenbar eine Fensterstellvorrichtung mit einem mittels eines Seilzuges auf und ab bewegbaren Halter, der mit der Fensterscheibe verbunden ist. Der Halter ist nicht nur mit dem Seilzug verbunden, sondern auch mittels einer Führungsrolle in einer Führungsschiene geführt. Zur Verbindung des Halters mit dem Seilzug ist ein Verbindungsstück mit einer Aufnahmevertiefung vorgesehen, in die ein am Seilzug befestigtes Klemmstück einbringbar ist. Das Verbindungsstück wird an dem Halter dadurch befestigt, daß ein an dem Verbindungsstück vorgesehener Zapfen durch eine Bohrung des Halters hindurchgesteckt und gesichert wird. Für ungeführte, lediglich am Seilzug befestigte Halter besteht bei dieser Ausführungsform die Gefahr, daß der Seilzug unbeabsichtigt aus dem Verbindungsstück austritt, wodurch die Fensterstellvorrichtung funktionsunfähig wird.

Aus der DE 37 27 153 A1 ist ein Seilzug-Fensterheber für Kraftfahrzeuge bekannt, welcher eine Antriebseinheit mit zwei Abgängen für das Seil aufweist, das endlos in zwei sich kreuzenden Schleifen verlegt ist. Das Seil ist über vier Umlenkrollen oder -bögen geführt, welche an den Eckbereichen von zwei im Abstand voneinander angeordneten Führungsschienen montiert sind. An den Führungsschienen sind Mitnehmerplatten für die Fensterscheibe formschlüssig gleitend geführt, an welchen der die Fensterscheibe bewegende Seilzug angreift. Die Scheibe selbst ist mit ihren Stirnkanten in weiteren Führungen der Tür geführt, wie dies bspw. aus der DE 39 21 289 C1 bekannt ist. Nachteilig hierbei ist der konstruktive Aufwand und vor allem die Überbestimmung der Scheibenführung insgesamt, da die Führungen des Fensterhebers bzw. der Mitnehmer und die Scheibenführungen exakt aufeinander abgestimmt sein müssen.

Demgegenüber liegt der Erfindung die Aufgabe zugrunde, einen Seilzug-Fensterheber der eingangs genannten Art dahingehend weiterzubilden, daß eine einfache Montage und sichere sowie dauerhafte Festlegung des Seilzuges an dem Mitnehmer gewährleistet ist.

Diese Aufgabe wird i. w. durch einen Seilzug-Fensterheber mit den Merkmalen des Anspruchs 1 gelöst. Zum einen wird hierdurch eine besonders einfache Verbindung des Seilzugs an dem Mitnehmer dadurch erzielt, daß der Mitnehmer in eine Aussparung des plattenförmigen Grundelements einsetzbar ist, wobei die Festlegung des Mitnehmers an dem Seilzug ohne Werkzeug erfolgt. Dadurch, daß das Klemmstück eine Kammer zur Aufnahme eines fest mit dem Seilzug verbundenen Halteelements sowie an den Stirnseiten der Kammer gebildete Durchbrüche für das Seil aufweist, ist eine einfache und sichere Festlegung zwischen dem Seilzug und dem Grundelement möglich. Dabei erfolgt die Festlegung zwischen Seilzug und dem Grundelement des Mitnehmers dadurch, daß das Seil mit seinem, bspw. in Form eines Nippels ausgebildeten Halteelement durch die Aussparung des Grundelements in Art einer Schlaufe hindurchgeführt, sodann das Halteelement in die Kammer des Klemmstücks eingelegt und danach das Klemmstück in die Aussparung an dem Grundelement eingedrückt wird. Hierdurch ist das Seil unverrückbar mit dem Mitnehmer verbunden und damit die Verbindung zwischen dem Seilzug und dem Mitnehmer geschaffen. Diese besondere Art der Festlegung des Seilzuges an dem Halteelement mittels des Klemmstückes bewirkt darüber hinaus, daß ein unbeabsichtigtes Lösen des Seilzuges von dem Mitnehmer sicher vermieden ist. Da das Klemmstück von der Oberseite des Grundelements in die Aussparung einsetzbar ist, während das Seil seitlich der Kammer des Klemmstücks entlang der Unterseite des Grundelements geführt ist, ist ein unbeabsichtigtes Austreten des Seilzuges aus der Kammer des Klemmstücks nicht möglich. Desweiteren wirkt der Seilzug selbst aufgrund der speziellen Führung an dem Grundelement als Sicherung gegen ein unbeabsichtigte Austreten des Klemmstücks aus der Aussparung des Grundelements.

Nach einer ersten besonderen Ausführungsform der Erfindung ist es vorgesehen, daß der Seilzug durch den wenigstens einen Mitnehmer endlos geführt ist. Hierdurch ist eine einfache Justiermöglichkeit zwischen der Fensterscheibe und dem an dem Seil festzulegenden Mitnehmer erreicht.

Dadurch, daß nach einer anderen vorteilhaften Ausgestaltung der Erfindung die Umlenkteile für das Seil an den Führungsschienen für die Fensterscheibe angeordnet sind, ist der konstruktive Aufwand des Fensterhebers wesentlich reduziert. Insgesamt wird durch das Entfallen der Schienen zur Führung des oder der mit der Fensterscheibe verbundenen Mitnehmer eine Überbestimmung des Führungssystems vermieden und ein günstigeres Drehmoment des Antriebes erreicht. Ein weiterer Vorteil besteht darin, daß die von den bekannten Fensterhebern ausgehenden Geräuschproblemen infolge von Stick-Slip-Erscheinungen nicht mehr gegeben sind.

Besonders vorteilhaft erweist sich die Maßnahme, daß das Klemmstück Rastnasen aufweist, welche das Grundelement im Bereich der Aussparung klemmend hintergreifen, wodurch die Montage des Seilzuges an dem Mitnehmer weiter verbessert wird.

Dadurch, daß sich beidseitig der Aussparung des Grundelements Schlitze zur Hindurchführung der beidseitig aus dem Klemmstück austretenden Seilabschnitte anschließen, kann das Klemmstück zum Zwecke der Montage ohne weiteres in die Aussparung des Grundelements von der Oberseite des Grundelements eingedrückt werden, wobei die seitlich der Kammer des Klemmstücks austretenden Seilabschnitte durch die Schlitze zur Unterseite des Grundelements geführt werden. Beschädigungen des Seilzuges während der Montage werden hierdurch sicher und aus konstruktiv einfacher Weise vermieden.

Zur Erleichterung der Montage des Fensterhebers ist eine Einstelleinrichtung für die Seillänge des Seilzuges vorgesehen mit in einer Trennstelle des Außenschlauchs des Seilzuges einsetzbarem Distanzstück. Hierdurch kann das Seil zunächst eine gewisse Lose aufweisen, um in einfacher Weise über die Umlenkteile geschlungen zu werden. Die Herausnahme der Lose nach der Montage erfolgt mittels eines Distanzstückes, das in die Trennstelle des Seilzuges zwischengesetzt wird.

Insoweit ist es nach der Erfindung vorgesehen, daß die Einstelleinrichtung einen Grundkörper aufweist mit einer durchgehenden Bohrung für den Seilzug und einem Längsschlitz zum Einsetzen des Distanzstückes zwischen die durch die Trennstelle gebildeten stirnseitigen Enden des Außenschlauches des Seilzuges. Hierdurch ist das Einsetzen des Distanzstückes zwischen die stirnseitigen Enden des Außenschlauches wesentlich erleichtert.

Die Handhabung läßt sich nochmals dadurch verbessern, daß die Bohrung des Grundkörpers, vorzugsweise im Bereich des Längsschlitzes einen Anschlag für den Außenschlauch des Seilzuges aufweist, so daß das Herausziehen des Außenschlauches aus dem Bereich des Längsschlitzes erleichtert ist.

Die Festlegung des Distanzstückes an dem Grundkörper läßt sich in besonders einfacher Weise dadurch realisieren, daß das Distanzstück im Klemmsitz, bspw. mittels Rast- und Gegenrastmitteln an dem Grundkörper gehalten ist, so daß das Einsetzen des Distanzstückes ohne Werkzeuge erfolgen kann.

Weiterhin ist es nach der Erfindung vorgesehen, daß das Distanzstück mit kreissegmentförmigen Wandungsfortsätzen den Grundkörper umfangsseitig umgreift und vorzugsweise zwischen zwei an den Grundkörper gebildeten Anlageschultern gegen axiale Verschiebung gesichert ist. Hierdurch ist in jedem Fall ein ungewolltes Ablösen des Distanzstückes vom Grundkörper vermieden.

Nach einem weiteren Gedanken der Erfindung weist das Distanzstück einen stegförmigen Fortsatz mit einer Längsnut zur Aufnahme des Seiles auf, wobei die Stirnflächen des Fortsatzes einen Anschlag für die Enden des Schlutzschlauches des Seilzuges im Bereich der Trennstelle bilden. Hierdurch ist eine besonders stabile Anordnung der Einstelleinrichtung erreicht.

Schließlich ist es nach der Erfindung vorgesehen, daß der Grundkörper und/oder das Distanzstück der Einstelleinrichtung und/oder das Klemmstück aus Kunststoff bestehen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine Ansicht der Innenseite einer Kraftfahrzeugtür mit einer möglichen Ausführungsform eines erfindungsgemäßen Fensterhebers,
- Figur 2: eine perspektivische Ansicht einer möglichen Ausführungsform des Grundelementes des Mitnehmers mit Klemmstück,
- Figur 3: das Grundelement mit Klemmstück gemäß Figur 2 in Montagestellung,
- Figur 4: eine perspektivische Ansicht einer möglichen Ausführungsform einer erfindungsgemäßen Einstelleinrichtung für die Seillänge des Seilzuges mit Grundkörper und Distanzstück und
- Figur 5: den Grundkörper und das Distanzstück gemäß Figur 4, jedoch in der Montagestellung unmittelbar vor Einsetzen des Distanzstückes.

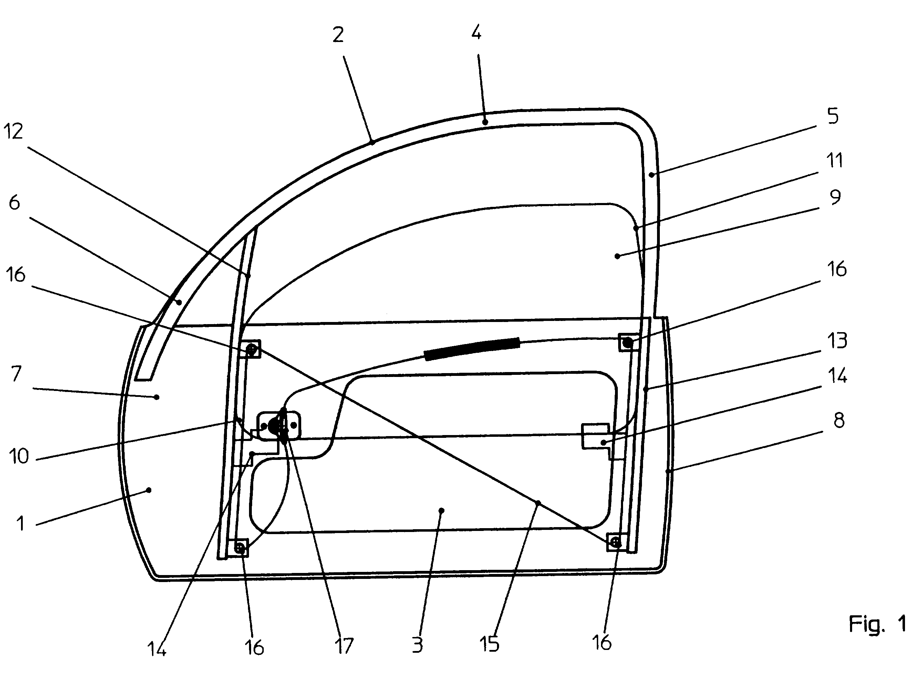

Die Fahrzeugtür, wie sie in Figur 1 dargestellt ist, weist einen unteren Türkasten 1 und einen oberen Fensterrahmen 2 auf. Der Türkasten 1 ist auf seiner Außenseite durch eine Türaußenhaut 3 verschlossen, während er auf der Innenseite üblicherweise mit einer Türinnenverkleidung abgedeckt ist. In der Darstellung der Figur 1 ist die Türinnenverkleidung abgenommen, so daß der in dem Türkasten 1 angeordnete Fensterheber sichtbar ist. Der Fensterrahmen 2 besitzt ein oberes Rahmenteil 4, ein hinteres Rahmenteil 5 und ein vorderes Rahmenteil 6. Die dargestellte Tür ist üblicherweise an ihrer vorderen Seite 7 mit einer Haltesäule eines Fahrzeugs über nicht dargestellte Scharniere schwenkbar befestigt, während an der hinteren Seite 8 ein nicht dargestellte Türschloßteil vorhanden ist.

Der Fensterrahmen 2 nimmt eine an seine Umfangskontur angepaßte Fensterscheibe 9 auf, die in der Darstellung der Figur 1 etwa zur Hälfte geöffnet ist. Die Fensterscheibe 9 wird an ihrer vorderen Kante 10 und an ihrer hinteren Kante 11 jeweils in einer vorderen und einer hinteren Führungsschiene 12, 13 geführt. An der unteren Kante der Fensterscheibe 9 ist bei dem hier gewählten Ausführungsbeispiel jeweils im Bereich der Ecke ein Mitnehmer 14 aufgeklemmt, an dem das Seil 29 eines Seilzuges 15 befestigt ist. Der Seilzug 15 ist über vier Umlenkteile in Form von Umlenkrollen 16 geführt, die innerhalb des Türkastens 1 am oberen und unteren Ende der beiden Führungsschienen 12, 13 befestigt sind. Der Seilzug 15 verläuft, kreuzweise über die Umlenkrollen 16 geführt, zu einer Welle 17 einer nicht gezeigten Fensterkurbel oder eines elektrischen Antriebes hin. Je nach Drehrichtung der Welle 17 wird das Seil 29 in die eine bzw. die andere Richtung gezogen, so daß sich über die Mitnehmer 14 die Fensterscheibe 9 nach oben oder nach unten bewegt.

Wie aus Figur 1 ersichtlich, sind die Mitnehmer 14 ohne separate Führungen mit dem Seil 29 auf- und abbewegbar. Die Führung der Mitnehmer 14 erfolgt allein über die Fensterscheibe 9 bzw. deren Führungsschienen 12, 13. Hierdurch sind Überbestimmungen in der Scheibenführung vermieden.

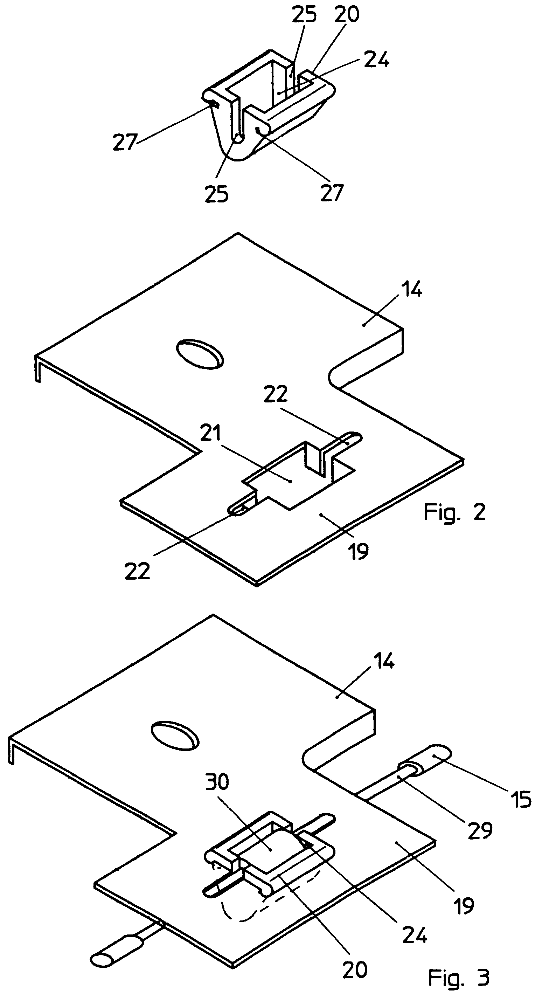

Die Festlegung eines solchen Mitnehmers 14 an dem Seil 29 ist Figuren 2 und 3 zu entnehmen. Der Mitnehmer 14 besitzt ein plattenförmiges Grundelement 19, an welchem eine nicht dargestellte Aufnahme für die Fensterscheibe 9 angeordnet ist. Das plattenförmige Grundelement 19 weist eine Aussparung 21 auf, in welche ein als clip ausgebildetes Klemmstück 20 einklipsbar ist. Dies kann bspw. dadurch erfolgen, daß an dem Klemmstück 20 Rastnasen 27 gebildet sind.

Das Klemmstück 20 weist eine Kammer 24 zur Aufnahme eines fest mit dem Seil 29 verbundenen Halteelements 30 auf. Das in Form eines Nippels ausgebildete Halteelement 30 besteht vorzugsweise aus Metall und ist unverschiebbar auf dem Seil 29 verpreßt. Die Verbindung zwischen Seil 29 und Fensterscheibe 9 erfolgt dadurch, daß das Seil 29 mit Nippel 30 gemäß der Darstellung des plattenförmigen Grundelementes 19 in Figuren 2 und 3 von unten schlaufenförmig durch die Aussparung 21 des Grundelementes 19 hindurchgeführt wird. Sodann wird der Nippel 30 in die Kammer 24 des Klemmstückes 20 eingelegt, wobei die sich beiderseits des Nippels 30 erstreckenden Seilabschnitte in die Durchbrüche 25 an den Stirnseiten des Klemmstückes 20 einlegen. Danach wird das Klemmstück 20 in die Aussparung 21 des Grundelementes 19 eingedrückt, wobei die sich beidseitig des Nippels 30 erstreckenden Seilabschnitte in die im Grundelement 19 vorgesehenen Schlitze 22 hindurchgeführt werden, ohne daß es zu einer Beschädigung des Seiles 29 kommt. Hierdurch ist das Seil 29 unverrückbar mit dem Mitnehmer 14 verbunden und damit auch die Fensterscheibe 9 mit dem Fensterheber-Antrieb.

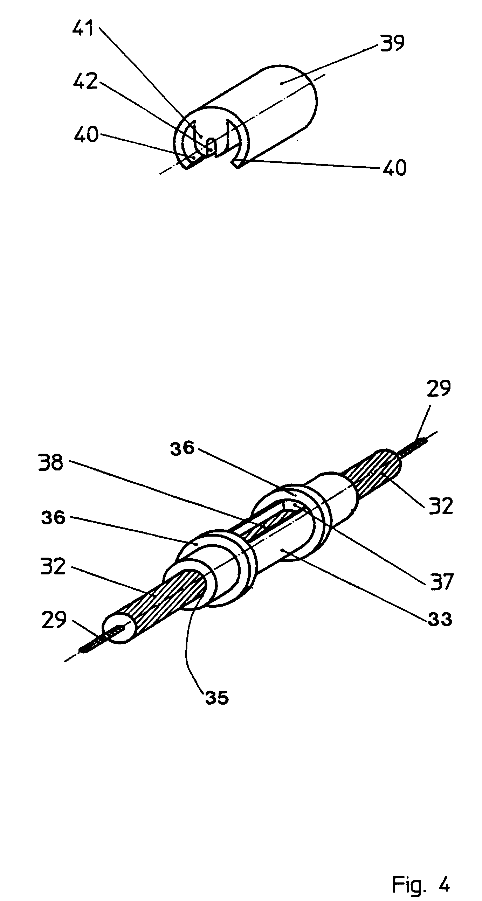

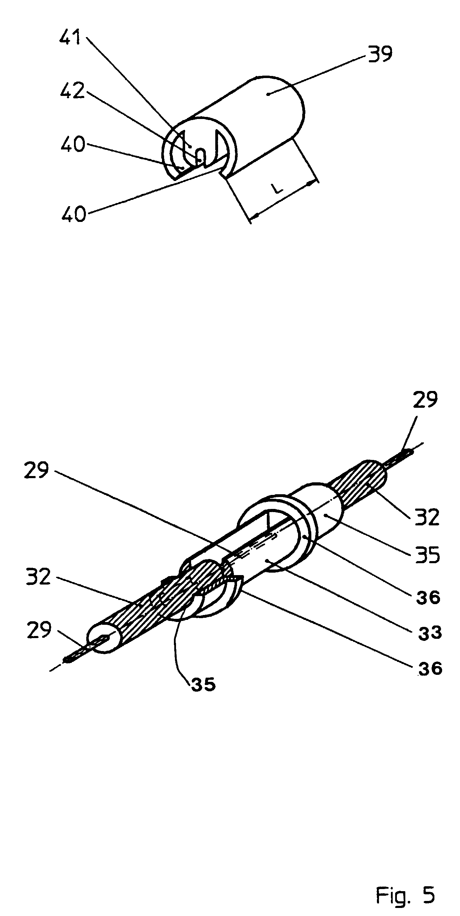

Zur Erleichterung der Montage des Fensterhebers weist das Seil 29 zunächst eine gewisse Lose auf, um in einfacher Weise über die Umlenkrollen 16 geschlungen zu werden. Nach der Montage des Seiles 29 muß die Lose jedoch wieder herausgenommen werden, um einen ordnungsgemäßen Betrieb zu gewährleisten. Um eine solche zusätzliche Einstellmöglichkeit bzgl. der Länge des Seilzuges 15 bzw. des Seiles 29 zu schaffen, ist gemäß Figuren 4 und 5 in den Seilzug 15 eine Seillängen-Einstelleinrichtung eingesetzt. Hierfür wird der Außenschlauch 32 des Seilzuges 15 unterbrochen und zwischen die beiden Enden des Schutzschlauches 32 ein Grundkörper 33 eingesetzt. Der Grundkörper 33 weist eine Bohrung 35 für den Seilzug 15 auf mit einem Längsschlitz 38 zum Einsetzen eines Distanzstückes 39 zwischen die durch die Trennstelle gebildeten stirnseitigen Enden des Außenschlauches 32.

In dem in Figur 4 gezeigten Zustand weist das Seil 29 eine solche Länge auf, daß es problemlos über die Umlenkrollen 16 herumgelegt werden kann. In diesem Montagezustand ist der Schutzschlauch 32 des Seilzuges 15 im Längsschlitz 38 des Grundkörpers 33 eingeschoben und steht an dem Anschlag 37 der Bohrung 35 an. Um von dieser Stellung ausgehend das Seil 29 zu spannen, wird das im Längsschlitz 38 einliegende Stück des Schutzschlauches 32 aus dem Längsschlitz herausgezogen, so daß hier nur noch das Seil 29 vorhanden ist, wie dies schematisch in Figur 5 dargestellt ist. Anschließend wird das Distanzstück 39 zwischen die beiden Anschlagschultern 36 derart auf den Grundkörper 33 aufgesteckt, daß das Seil 29 in der an einem stegförmigen Fortsatz 41 des Distanzstückes 39 gebildeten Längsnut 42 einliegt. Beim Einsetzen weichen die Wandungsfortsätze 40 des aus Kunststoff bestehenden Distanzstückes 39 elastisch aus, um schließlich die durch die Anschlagschultern 36 gebildete Einziehung am Grundkörper 33 umfangsseitig zu umschließen, i. w. bündig mit den Anschlagschultern 36 abzuschließen. Hierdurch ist ein ungewolltes Ablösen des Distanzstückes 39 vom Grundkörper 33 vermieden.

Um eine unterschiedliche Längeneinstellung vornehmen zu können, ist es auch möglich, Distanzstücke 39 unterschiedlicher Länge L zu verwenden, um zusätzliche Toleranzen auszugleichen. Dabei wird das Distanzstück 39 durch die Seilspannung und den damit verbundenen Anpreßdruck gegen seine Stirnfläche in axialer Anschlagstellung an dem Anschlag 36 des Grundkörpers 37 gehalten.

## Patentansprüche

1. Seilzug-Fensterheber für Fahrzeuge, insbesondere Kraftfahrzeuge, mit einer Antriebseinheit für das Seil (29) des Seilzuges (15), welches mittels Umlenkteilen (16) über wenigstens eine i. w. vertikale Strecke geführt und in diesem Abschnitt mit einem Mitnehmer (14) verbunden ist, an welchem die Fensterscheibe (9), vorzugsweise mit ihrem unteren Randbereich gehalten ist, wobei die Fensterscheibe (9) mit ihren Seitenrändern (10, 11) in fahrzeug- bzw. türseitig angeordneten Führungsschienen (12, 13) geführt ist, wobei sich mindestens ein Mitnehmer (14) ohne separate Führungen mit dem Seil (29) auf- und abbewegt und der Seilzug (15) mittels eines Klemmstücks (20) an dem Mitnehmer (14) gehalten ist, dadurch gekennzeichnet, daß der Mitnehmer (14) ein Grundelement (19) mit einer Aussparung (21) aufweist, in welche das mit dem Seil (29) verbindbare Klemmstück (20) von der Oberseite des Grundelements (19) einsetzbar ist, und das Klemmstück (20) eine Kammer (24) zur Aufnahme eines fest mit dem Seil verbundenen Halteelements (30) sowie an den Stirnseiten der Kammer (24) gebildete Durchbrüche (25) für das Seil (29) aufweist, wobei das Seil (29) seitlich der Kammer (24) des Klemmstücks (20) entlang der Unterseite des Grundelements (19) geführt ist.

2. Fensterheber nach Anspruch 1, dadurch gekennzeichnet, daß der Seilzug (15) durch den wenigstens einen Mitnehmer (14) endlos geführt ist.

3. Fensterheber nach einem der vorhergehenden Ansprüche, dadurch gekennzeichnet, daß die Umlenkteile (16) für das Seil (29) an den Führungsschienen (12, 13) für die Fensterscheibe (9) angeordnet sind.

4. Fensterheber nach einem der vorhergehenden Ansprüche, dadurch gekennzeichnet, daß das Klemmstück (20) Rastnasen (27) aufweist, welche das Grundelement (19) im Bereich der Aussparung (21) klemmend hintergreifen.

5. Fensterheber nach einem der vorhergehenden Ansprüche, dadurch gekennzeichnet, daß sich beidseitig der Aussparung (21) des Grundelements (19) Schlitze (22) zur Hindurchführung der beidseitig aus dem Klemmstück (20) austretenden Seilabschnitte anschließen.

6. Fensterheber nach einem der vorhergehenden Ansprüche, dadurch gekennzeichnet, daß eine Einstelleinrichtung für die Seillänge des Seilzuges (15) vorgesehen ist mit in eine Trennstelle des Außenschlauches (32) des Seilzuges (15) einsetzbarem Distanzstück (39).

7. Fensterheber nach Anspruch 6, dadurch gekennzeichnet, daß die Einstelleinrichtung einen Grundkörper (33) aufweist mit einer durchgehenden Bohrung (35) für den Seilzug (15) und einem Längsschlitz (38) zum Einsetzen des Distanzstückes (39) zwischen die durch die Trennstelle gebildeten stirnseitigen Enden des Außenschlauches (32) des Seilzuges (15).

8. Fensterheber nach Anspruch 7, dadurch gekennzeichnet, daß die Bohrung (35), vorzugsweise im Bereich des Längsschlitzes (38), einen Anschlag (37) für den Außenschlauch (32) des Seilzuges (15) aufweist.

9. Fensterheber nach Anspruch 7 oder 8, dadurch gekennzeichnet, daß das Distanzstück (39) im Klemmsitz am Grundkörper (33) gehalten ist.

10. Fensterheber nach einem der Ansprüche 6 bis 9, dadurch gekennzeichnet, daß das Distanzstück (39) mit kreissegmentförmigen Wandungsfortsätzen (40) den Grundkörper (33) umfangsseitig umgreift und vorzugsweise zwischen zwei an dem Grundkörper (33) gebildeten Anlageschultern (36) gegen axiale Verschiebung gesichert ist.

11. Fensterheber nach einem der Ansprüche 6 bis 10, dadurch gekennzeichnet, daß das Distanzstück (39) einen stegförmigen Fortsatz (41) mit einer Längsnut (42) zur Aufnahme des Seiles (29) aufweist, wobei die Stirnflächen des Fortsatzes (41) einen Anschlag für die Enden des Schutzschlauches (32) des Seilzuges (15) im Bereich der Trennstelle bilden.

12. Fensterheber nach einem der Ansprüche 1 bis 11, dadurch gekennzeichnet, daß der Grundkörper (33) und/oder das Distanzstück (39) der Einstelleinrichtung und/oder das Klemmstück (20) aus Kunststoff bestehen.

## Claims

1. Cable-operated window lifter for vehicles, in particular motor vehicles, with a drive unit for the cables (29) of the cable-pull (15), which is guided over at least one substantially vertical path section by means of deflecting parts (16) and connected in this section with an entraining member (14), at which the window pane (9) is retained, preferably by its lower rim region, wherein the window pane (9) is guided by its side rims (10, 11) in guide rails (12, 13) arranged at the vehicle or door, wherein at least one entraining member (14) moves up and down with the cable (29) without separate guides and the cable-pull (15) is retained at the entraining member (14) by means of a clamping member (20), characterised thereby, that the entraining member (14) comprises a basic element (19) with a recess (21), into which the clamping member (20), which is connectable with the cable (29), is insertable from the upper side of the basic element (19), and the clamping member (20) comprises a chamber (24) for the reception of a retaining element (30), which is firmly connected with the cable, as well as passages (25), which are formed at the end faces of the chamber (24), for the cable (29), wherein the cable (29) is guided along the underside of the basic element (19) laterally of the chamber (24) of the clamping member (20).

2. Window lifter according to claim 1, characterised thereby, that the cable-pull (15) is guided endlessly by the at least one entraining member (14).

3. Window lifter according to one of the preceding claims, characterised thereby, that the deflecting parts (16) for the cable (29) are arranged at the guide rails (12, 13) for the window pane (9).

4. Window lifter according to one of the preceding claims, characterised thereby, that the clamping member (20) comprises detent lugs (27), which clampingly engage behind the basic element (19) in the region of the recess (21).

5. Window lifter according to one of the preceding claims, characterised thereby, that slots (22) for the leading-through of the cable portions issuing from the clamping member (20) at both sides adjoin both sides of the recess (21) of the basic element (19).

6. Window lifter according to one of the preceding claims, characterised thereby, that an adjusting equipment is provided for the cable length of the cable-pull (15) with a spacer member (39), which is insertable into a joint gap of the outer hose (32) of the cable pull (15).

7. Window lifter according to claim 6, characterised thereby, that the adjusting equipment comprises a basic body (33) with a continuous bore (35) for the cable-pull (15) and a longitudinal slot (38) for the insertion of the spacer member (39) between those ends of the outer hose (32) of the cable pull (15), which are formed by the joint gap.

8. Window lifter according to claim 7, characterised thereby, that the bore (35), preferably in the region of the longitudinal slot (38), comprises an abutment (37) for the outer hose (32) of the cable pull (15).

9. Window lifter according to claim 7 or 8, characterised thereby, that the spacer member (39) is retained in clamping fit at the basic body (33).

10. Window lifter according to one of the claims 6 to 9, characterised thereby, that the spacer member (39) encompasses the basic body (33) at the circumference by wall prolongations (40) in the shape of a circular segment and is secured against axial displacement preferably between two bearing shoulders (36) formed at the basic body (33).

11. Window lifter according to one of the claims 6 to 9, characterised. thereby, that the spacer member (39) comprises a web-shaped prolongation (41) with a longitudinal groove (42) for the reception of the cable (29), wherein the end faces of the prolongation (41) form an abutment for the ends of the protective hose (32) of the cable-pull (15) in the region of the joint gap.

12. Window lifter according to one of the claims 1 to 11, characterised thereby, that the basic body (33) and/or the spacer member (39) of the adjusting equipment and/or the clamping member (20) consist of synthetic material.

## Revendications

1. Lève-glace équipé d'un système à câble pour des véhicules, notamment des véhicules automobiles, comportant une unité d'entraînement pour le câble (29) du système à câble (15), qui est guidé au moyen d'éléments de renvoi (16) sur au moins une section sensiblement verticale et est relié, dans cette partie, à un organe d'entraînement (14), sur lequel la vitre de fenêtre (9) est fixée de préférence par sa partie de bord inférieure, la vitre de fenêtre (9) étant guidée, par ses bords latéraux (10,11), dans des rails de guidage (12,13) disposés dans le véhicule ou dans la portière, et dans lequel au moins un organe d'entraînement (14) peut être soulevé et abaissé, sans guides séparés, au moyen du câble (29) et le système à câble (15) est retenu sur l'organe d'entraînement (14) à l'aide d'un organe de serrage (20), caractérisé en ce que l'organe d'entraînement (14) possède un élément de base (19) pourvu d'une ouverture (21), dans laquelle l'élément de serrage (20), qui peut être relié au câble (29), peut être inséré à partir du côté supérieur de l'élément de base (19), et en ce que l'élément de serrage (20) possède une chambre (24) servant à loger un élément de retenue (30) relié de façon fixe au câble, ainsi que des passages (25) formés dans les faces frontales de la chambre (24) et prévus pour le câble (29), le câble (29) étant guidé latéralement par rapport à la chambre (24) de l'élément de serrage (20), le long de la face inférieure de l'élément de base (19).

2. Lève-glace selon la revendication 1, caractérisé en ce que le système à câble (15) est guidé sans fin à l'aide dudit au moins un organe d'entraînement (14).

3. Lève-glace selon l'une des revendications précédentes, caractérisé en ce que les éléments de renvoi (16) pour le câble (29) sont disposés sur les rails de guidage (12,13) pour la vitre de fenêtre (9).

4. Lève-glace selon l'une des revendications précédentes, caractérisé en ce que l'élément de serrage (20) comporte des becs d'encliquetage (27), qui s'engagent avec un effet de serrage derrière l'élément de base (19) dans la zone de l'évidement (21).

5. Lève-glace selon l'une des revendications précédentes, caractérisé en ce que des fentes (22) pour le passage des parties du câble, qui sortent des deux côtés de l'élément de serrage (20), se raccordent, des deux côtés, à l'évidement (21) de l'élément de base (19).

6. Lève-glace selon l'une des revendications précédentes, caractérisé en ce qu'il est prévu un dispositif de réglage de la longueur du câble du système à câble (15), qui est équipé d'une entretoise (39) pouvant être insérée dans une zone de séparation de la gaine extérieure (32) du système à câble (15).

7. Lève-glace selon la revendication 6, caractérisé en ce que le dispositif de réglage possède un corps de base (33) qui est pourvu d'un perçage traversant (35) pour le système à câble (15) et comporte une fente longitudinale (38) pour l'insertion de l'entretoise (39) entre les extrémités frontales, définies par la zone de séparation, de la gaine extérieure (32) du système à câble (15).

8. Lève-glace selon la revendication 7, caractérisé en ce que le perçage (35) possède, de préférence au niveau de la fente longitudinale (38), une butée (37) pour le tuyau extérieur (32) du système à câble (15).

9. Lève-glace selon la revendication 7 ou 8, caractérisé en ce que l'entretoise (39) est maintenue à l'état serré contre le corps de base (33).

10. Lève-glace selon l'une des revendications 6 à 9, caractérisé en ce que l'entretoise (39) enserre sur sa périphérie le corps de base (33) au moyen de prolongements de paroi (40) en forme de segments de cercle, et de préférence est bloquée contre tout déplacement axial entre deux épaulements de butée (36) formés sur le corps de base (33).

11. Lève-glace selon l'une des revendications 6 à 10, caractérisé en ce que l'entretoise (39) possède un prolongement en forme de barrette (41) pourvu d'une rainure longitudinale (42) servant à loger le câble (29), les faces frontales du prolongement (41) formant une butée pour les extrémités de la gaine protectrice (32) du câble (15) au niveau de la zone de séparation.

12. Lève-glace selon l'une des revendications 1 à 11, caractérisé en ce que le corps de base (33) et/ou l'entretoise (39) du dispositif de réglage et/ou l'élément de serrage (20) sont réalisés en matière plastique.
